# EUROPEAN PATENT APPLICATION

(11) **EP 2 018 988 A1**
(43) Date of publication of application: **28.01.2009**
(21) Application number: 08380159.7
(22) Date of filing: 20.05.2008
(51) Int. Cl.: B60J 10/08, B60J 10/00

(54) **Sealing gasket for automobiles**

(30) Priority: 11.06.2007 ES 200701249 U
(71) Applicant: Seat, S.A., 08760 Martorell - Barcelona (ES)
(72) Inventor: Fabón Resina, Lucia, 08760 Martorell - Barcelona (ES); González Muñoz, Maria Antonia, 08760 Martorell - Barcelona (ES); García Presas, José B., 08760 Martorell - Barcelona (ES)
(74) Representative: Carvajal y Urquijo, Isabel

(57) **Abstract**

The invention relates to a sealing gasket for automobiles comprising an elastically deformable tubular body 1 and a planar outer partition 2 running radially along the entire body 1; from the partition 2 of which there project, on both sides thereof, flanges 3 inclined towards the tubular body.

## Description

### Field of the Invention

The present invention relates to a sealing gasket for automobiles, especially applicable as a sealing gasket for automobile doors.

### Background of the Invention

The sealing gaskets arranged inside vehicle door panels currently do not offer a complete sealing of the interior. These gaskets are fixed to the panel by means of an adhesive type chemical attachment which does not always behave optimally and they have deficiencies in their operation, which can lead to intrusions of external elements into the interior.

Current sealing gaskets arranged in the automobile door panel, especially in the rear window of the door, are fixed in their position by means of an adhesive type chemical attachment. These types of attachments have several drawbacks, such as the difficulty for placing the gasket in its position. This causes the effectiveness of the sealing gasket assembly to be reduced, since the correct positioning is essential for a good seal of the different parts forming the assembly.

Another problem which this type of attachment involves is the deficiency of the attachment itself, which is not always correctly fixed in its position or which loses its effectiveness over time. This deficiency in the behavior of the attachment causes sealing losses and possible intrusions into the interior. Another problem of the gaskets fixed by chemical attachment is the difficulty for clipping the rear window with the rest of the assembly since the gasket must be adapted to the radii of the rear window.

### Description of the Invention

The object of the present invention is to eliminate the problems set forth by means of a gasket allowing an optimal sealing of the interior and furthermore using a mechanical fixing provided by the actual elements of the gasket for its assembly.

According to the present invention, the sealing gasket is formed by an elastically deformable tubular body and by a planar outer partition running radially along the entire body.

The tubular body can have a circular, oval section, etc. and is the part of the gasket providing the sealing function to the assembly.

The outer partition can be made of the same material as the tubular body or of another different material, but forming a single part therewith. Flanges inclined towards the body project from this partition on both sides thereof. The partition with these flanges forms the means for fixing the sealing gasket to the position made in the door panel.

The tubular body can be manufactured in a plastic material allowing certain elastic flexibility of the gasket for a correct positioning of the system and optimal impermeability. Furthermore, this body can optionally have one or several supplementary lips increasing the sealing factor of the assembly upon sticking to the surface for positioning the gasket.

As has already been indicated, the outer partition can be made of a material that is more rigid than the tubular body, in order to facilitate the fixing of the assembly, although it is also possible that it is manufactured from the same plastic material as the tubular body.

The partition can include a single flange or two flanges on each side and as has been indicated, they will useful for facilitating the fixing of the assembly to the position intended for it in the vehicle door panel. This mechanical fixing allows a quick and accurate positioning of the gasket in the gap made in the door panel. The problem of clipping the rear window is solved with this type of fixing, since the depth of the groove in which the gasket is positioned can be varied and the stylization of the tubular body can thus be prevented from making the correct fitting of the assembly difficult.

During the normal movement of the vehicle vibrations deforming the tubular body of the gasket occur, normally causing noise which is annoying for the comfort of the users. In order to prevent this noise, the tubular body can be provided with a roughness on its inner surface, which roughness does not allow the opposite parts of the gasket to be able to adhere to one another.

With this type of gasket an optimal sealing of the interior is achieved and in turn an easier and therefore quicker assembly. Upon eliminating the chemical fixing the possible difficulties for correctly positioning the gasket are prevented, as well as the subsequent degradation of the adhesive or the lack of adhesion between the different elements of the assembly. As a result of the mechanical fixing of the gasket, an attachment which is solid, non-degradable and compatible with all types of materials is achieved.

The gasket of the invention further allows a great versatility in the design since the grooves in which the gasket is fitted can be adapted in order to be adapted to any type of curvature radius without this affecting the sealing parameter. Multiple designs for the gasket are also allowed depending on the required degree of sealing, adding or removing pairs of lips to or from the assembly for the purpose of obtaining an optimal sealing in any situation.

### Brief Description of the Drawings

A non-limiting embodiment is shown in the attached drawings, with the aid of which the advantages and features of the gasket of the invention can be better understood.

In the drawings:
Figure 1 is a perspective view of a section of a gasket formed according to the invention.
Figure 2 is a front elevational view of the gasket of Figure 1.
Figures 3 to 5 are views similar to Figure 2, showing as many other implementation variants.
Figure 6 shows in detail, on a larger scale, the inner part of the tubular body of the gasket of Figure 1.
Figure 7 shows a sectional view of the position of the gasket inside the groove of the door panel.

### Detailed Description of an Embodiment

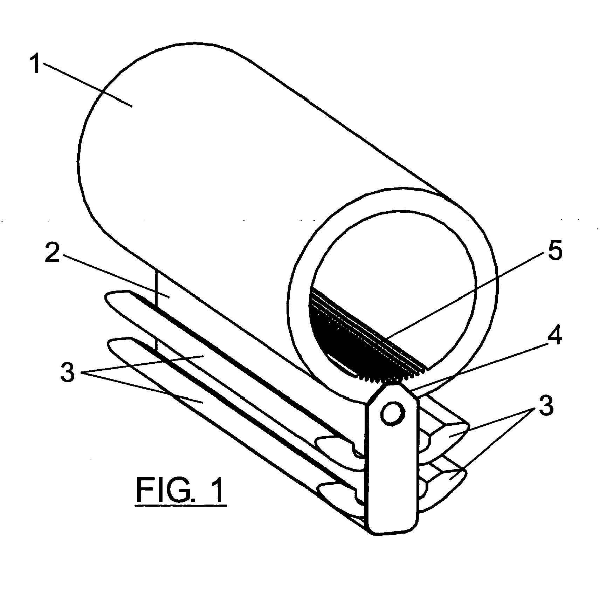

Figure 1 shows a sealing gasket for automobiles formed according to the invention, comprising an elastically deformable tubular body 1 and a longitudinal outer partition 2 projecting radially from the body 1 and having a planar configuration. Flanges 3, two on each side in the case of Figure 1, which are inclined and curved towards the tubular body 1, project from this partition 2 on both sides and all along such partition.

Although the tubular body 1 is shown with a circular section, it could also have an oval section or a section with other outlines.

The tubular body 1 will be formed based on a plastic material which is elastically deformable and the partition 2 can be made of the same material or of another more rigid material, a separation line 4 then being between both but in any case forming a single part.

The inner surface of the tubular body 1 can have a ribbing 5, forming a roughness preventing opposite areas of said body from being able to adhere upon being deformed.

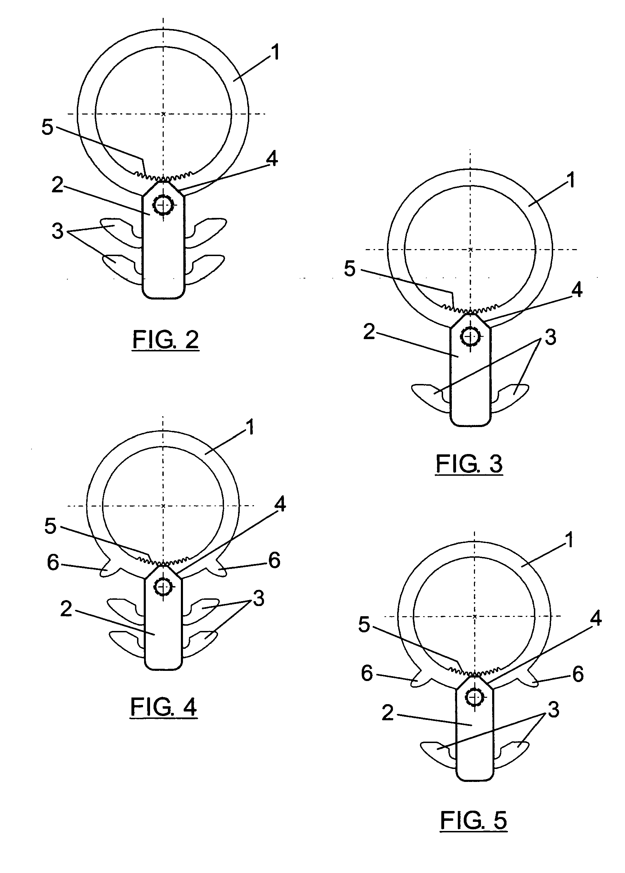

The number of flanges 3 can vary, as shown in Figure 3, in which a single flange 3 projects on each side of the partition 2.

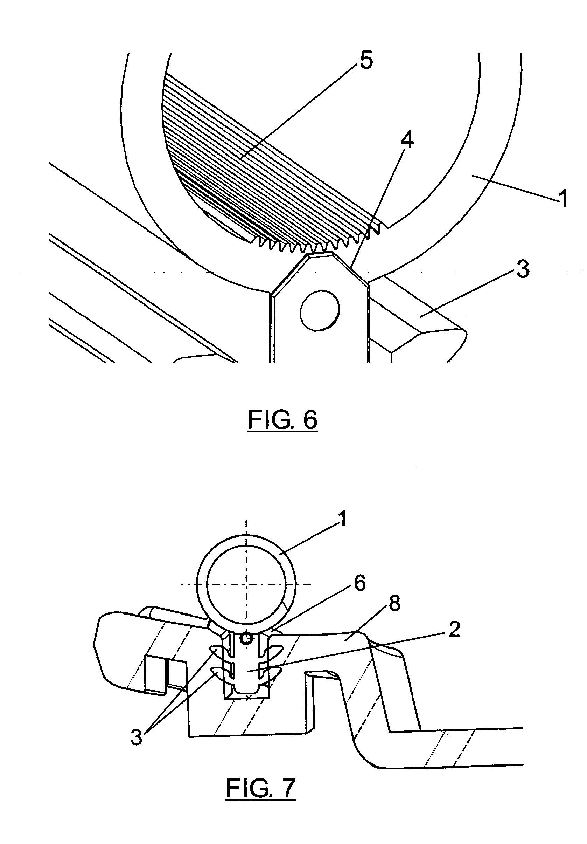

In the case of Figure 4, two flanges 3 project from the partition 2 on each side and two lips 6 project from the tubular body 1, which lips will increase the sealing factor of the assembly upon sticking to the surface for positioning the gasket, as shown in Figure 7.

The tubular body 1 will form the element for sealing the gasket, whereas the partition 2 with the flanges 3 forms the means for fixing or locking the gasket upon being tightly introduced into the groove 7 of the door panel 8 with the deformation of the flanges 3.

Figure 7 also shows how a greater sealing is achieved upon supporting the lips 6 of the tubular body 1 on the panel 8.

The flanges 3 of the partition 2 are bent to their correct position upon inserting the sealing gasket into the groove 7, at which time they can recover their original shape due to the effect of the elasticity of the material itself.

In the example of Figure 5 a flange 3 projects from the partition 2 on each side and two lips 6 project from the tubular body 1.

As has already been indicated, the assembly can be manufactured in a single material or in two different materials, one more flexible for the tubular body 1 and the other one more rigid for the partition 2.

The inner roughness 5 can occupy only an area near the outer partition 2 and can furthermore be achieved by different reliefs to the ribbing 5.

## Claims

1. A sealing gasket for automobiles comprising an elastically deformable tubular body 1 and a planar outer partition 2 running radially along the entire body 1; from the partition 2 of which there project, on both sides thereof, flanges 3 inclined towards the tubular body.

2. A gasket according to claim 1, **characterized in that** the tubular body has longitudinal lips 6 near the outer partition 2.

3. A gasket according to claim 1, **characterized in that** the inner surface 5 of the tubular body 1 is rough, at least in the area adjacent to the outer partition 2.

4. A gasket according to claim 1, **characterized in that** the flanges 3 of the outer partition have a curved cross-section, with the concavity directed towards the tubular body 1.
